# EUROPÄISCHE PATENTSCHRIFT

(11) **EP 3 510 294 B1**
(45) Veröffentlichungstag und Bekanntmachung des Hinweises auf die Patenterteilung: **21.04.2021**
(21) Anmeldenummer: 17768349.7
(22) Anmeldetag: 21.08.2017
(51) Int. Cl.: F16D 25/10, F16D 25/08

(54) **KUPPLUNGSEINRICHTUNG**
CLUTCH DEVICE
ENSEMBLE EMBRAYAGE

(30) Priorität: 09.09.2016 DE 102016217218
(43) Veröffentlichungstag der Anmeldung: 17.07.2019
(73) Patentinhaber: Schaeffler Technologies AG & Co. KG, 91074 Herzogenaurach (DE)
(72) Erfinder: GRADOLPH, Christian, 76865 Rohrbach (DE)
(86) Internationale Anmeldenummer: PCT/DE2017/100696
(87) Internationale Veröffentlichungsnummer: WO 2018/046049

(56) Entgegenhaltungen:
- EP-A1- 1 777 426
- EP-A1- 2 287 487
- DE-A1-102007 003 107
- DE-A1-102009 030 135
- DE-A1-102011 117 781
- FR-A1- 2 871 110
- US-A1- 2011 240 384

## Beschreibung

Die Erfindung betrifft eine Kupplungseinrichtung mit den Merkmalen gemäß dem Oberbegriff von Anspruch 1.

Kupplungseinrichtungen bei denen eine Anfahrkupplung zur trennbaren Drehmomentübertragung zwischen einem ersten Antriebselement, wie einer Brennkraftmaschine und einem Abtriebselement, wie einem Getriebe vorgesehen ist, sind allgemein bekannt. Auch sind Trennkupplungen zur trennbaren Drehmomentübertragung von einem zweiten Antriebselement, wie einem Elektromotor und dem Getriebe bekannt. Dabei gibt es Kupplungseinrichtungen mit einer Anfahrkupplung und einer Trennkupplung, bei denen die beiden Kupplungen in jeweils getrennten Gehäusen untergebracht sind.

Aus jeder der DE 10 2009 030135 A1, der FR 2 871 110 A1, der EP 1 777 426 A1 und der DE 10 2011 117781 A1 ist eine Kupplungseinrichtung gemäß dem Oberbegriff des Anspruchs 1 bekannt

Weitere Beispiele sind aus US2011240384 A1, EP2287487 A1 und DE102007003107 A1 bekannt.

Die Aufgabe der Erfindung besteht darin, den Brauraumbedarf einer derartigen Kupplungseinrichtung zu verringern, insbesondere auch die Herstellungskosten und die Betriebskosten zu verringern.

Erfindungsgemäß wird diese Aufgabe durch eine Kupplungseinrichtung mit den Merkmalen gemäß Anspruch 1 gelöst.

Entsprechend wird eine Kupplungseinrichtung vorgeschlagen, aufweisend eine Anfahrkupplung zur trennbaren Drehmomentübertragung zwischen einem ersten Antriebselement, insbesondere einer Brennkraftmaschine und einem Abtriebselement, insbesondere einem Getriebe und aufweisend eine Trennkupplung zur trennbaren Drehmomentübertragung von einem zweiten Antriebselement, insbesondere einem Elektromotor und dem Abtriebselement, insbesondere dem Getriebe, wobei die Anfahrkupplung und die Trennkupplung als nasslaufende Kupplungen ausgebildet sind und ein Fluid vorgesehen ist, das mit der Anfahrkupplung und der Trennkupplung als Kühlmedium zusammenwirkt, wobei die Anfahrkupplung und die Trennkupplung in einem von dem gemeinsamen Fluid durchströmbaren Nassraum angeordnet sind. Dadurch kann insbesondere der Brauraumbedarf einer derartigen Kupplungseinrichtung verringert werden, insbesondere auch die Herstellungskosten und die Betriebskosten verringert werden.

Eine besonders bevorzugte Ausführung der Erfindung zeichnet sich dadurch aus, dass der Nassraum durch ein gemeinsames Gehäuse gebildet wird.

Erfindungsgemäß sind die Anfahrkupplung und die Trennkupplung als Lamellenkupplung ausgebildet.

Eine weitere, spezielle Ausgestaltung der Erfindung zeichnet sich dadurch aus, dass die Anfahrkupplung und die Trennkupplung parallel zueinander geschaltet sind.

Eine vorteilhafte Ausführungsform der Erfindung zeichnet sich dadurch aus, dass die Anfahrkupplung und die Trennkupplung seriell zueinander geschaltet sind, womit zur Bewirkung einer Drehmomentübertragung vom ersten Antriebselement zum Abtriebselement sowohl die Anfahrkupplung als auch die Trennkupplung geschlossen sind.

Eine bevorzugte spezielle Ausgestaltung der Erfindung zeichnet sich dadurch aus, dass in dem Nassraum ein Drehschwingungsdämpfer und/oder ein Drehschwingungstilger, insbesondere ein Fliehkraftpendel angeordnet ist. Dabei kann der Drehschwingungsdämpfer als einstufiger oder mehrstufiger Drehschwingungsdämpfer mit einer ersten Dämpferstufe und einer zweiten Dämpferstufe, insbesondere auch noch mit weiteren Dämpferstufen ausgebildet sein. Auch können weitere Fliehkraftpendel angeordnet sein. Insbesondere sind bei Anordnung mehrerer Fliehkraftpendel diese an einem gemeinsamen Bauteil oder an unterschiedlichen Bauteilen der Kupplungseinrichtung, insbesondere an unterschiedlichen Bauteilen des Drehschwingungsdämpfers angeordnet.

Bei Anordnung mehrerer Fliehkraftpendel können diese auf unterschiedliche Anregungsordnungen abgestimmt sein.

Es kann vorgesehen sein, die Trägheitsmasse des zweiten Antriebselement, insbesondere den Rotor des Elektromotors als Tilgermasse zu nutzen. Dabei kann diese Trägheitsmasse eine Primärmasse oder eine Sekundärmasse des Drehschwingungsdämpfers darstellen.

Eine weitere, spezielle Ausgestaltung der Erfindung zeichnet sich dadurch aus, dass die Anfahrkupplung und die Trennkupplung axial versetzt angeordnet sind.

Eine bevorzugte spezielle Ausgestaltung der Erfindung zeichnet sich dadurch aus, dass wenigstens ein Teil vom zweiten Antriebselement von dem gemeinsamen Fluid beaufschlagt wird.

Eine besonders bevorzugte Ausführung der Erfindung zeichnet sich dadurch aus, dass die Betätigung der Anfahrkupplung und/oder der Trennkupplung über eine gehäusefeste Kolben-Zylindereinheit, ein Betätigungslager und ein über das Betätigungslager gegenüber der gehäusefesten Kolben-Zylinder-Einheit verdrehbares Betätigungsmittel erfolgt.

Erfindungsgemäß weisen die Anfahrkupplung und die Trennkupplung einen gemeinsamen Lamellenträger auf.

Weitere Vorteile und vorteilhafte Ausgestaltungen der Erfindung ergeben sich aus der Beschreibung und den Abbildungen.

### Figurenbeschreibung

Die Erfindung wird im Folgenden unter Bezugnahme auf die Abbildungen ausführlich beschrieben. Es zeigen im Einzelnen:
Figur 1: Einen Halbschnitt eines Querschnitts durch eine Kupplungseinrichtung in einer speziellen Ausführungsform der Erfindung.
Figur 2: Eine Übersicht der in den nachfolgenden Figuren 3 bis 7 verwendeten Symbole.
Figur 3: Ein Schemabild einer Kupplungseinrichtung in einer weiteren speziellen Ausführungsform der Erfindung.
Figur 4: Ein Schemabild einer Kupplungseinrichtung in einer weiteren speziellen Ausführungsform der Erfindung.
Figur 5: Weitere Schemabilder jeweils einer Kupplungseinrichtung in einer weiteren speziellen Ausführungsform der Erfindung.
Figur 6: Ein Schemabild einer Kupplungseinrichtung in einer weiteren speziellen Ausführungsform der Erfindung.
Figur 7: Weitere Schemabilder jeweils einer Kupplungseinrichtung in einer weiteren speziellen Ausführungsform der Erfindung.

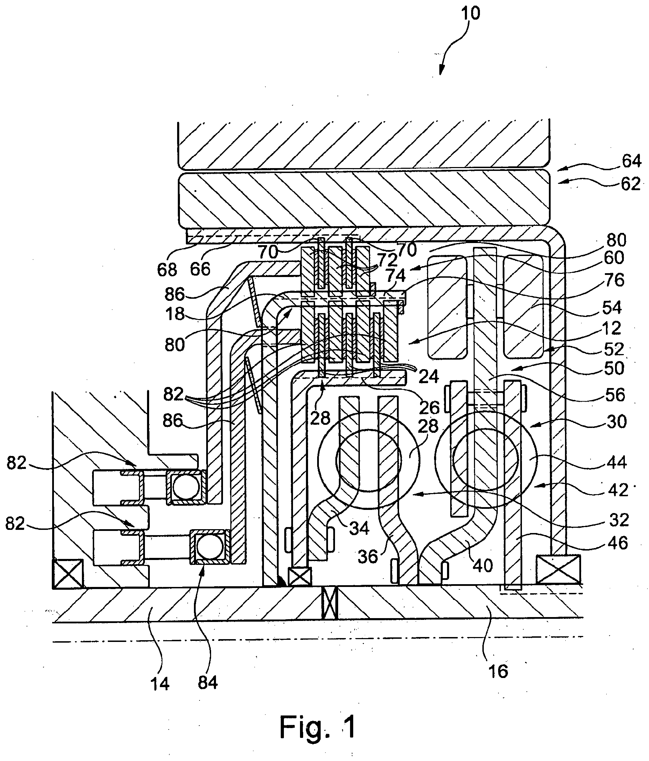

Figur 1 zeigt einen Halbschnitt eines Querschnitts durch eine Kupplungseinrichtung (10) in einer speziellen Ausführungsform der Erfindung. Die Kupplungseinrichtung (10) weist eine Anfahrkupplung (12) zur trennbaren Drehmomentübertragung zwischen einem ersten Antriebselement, insbesondere einer Brennkraftmaschine und einem Abtriebselement, insbesondere einem Getriebe auf. Das Antriebselement leitet das Drehmoment über die Antriebswelle (14) in die Kupplungseinrichtung (10) ein. Das Drehmoment wird über die Abtriebswelle (16) aus der Kupplungseinrichtung (10) in ein nachfolgendes Getriebe geleitet.

Die Anfahrkupplung (12) ist als Lamellenkupplung ausgebildet, mit einem mit der Antriebswelle (14) verbundenen Eingangslamellenträger (18) als Kupplungseingang (20), hier ein Aussenlamellenträger der Anfahrkupplung (12). In dem Eingangslamellenträger (18) sind antriebsseitige Lamellen (22) eingehängt, die bei betätigter Anfahrkupplung (12) mit abtriebsseitigen Lamellen (24) in Reibeingriff gebracht werden können. Die abtriebsseitigen Lamellen (24) sind in einem Ausgangslamellenträger (26) als Kupplungsausgang (28), hier ein Innenlamellenträger eingehängt.

Im Kraftfluss zwischen dem Ausgangslamellenträger (26) der Anfahrkupplung (12) und der Abtriebswelle (16) ist ein Drehschwingungsdämpfer (30) angeordnet. Dieser weist zwei Dämpferstufen auf. Die erste Dämpferstufe (32) weist ein erstes Dämpfereingangsteil (34) und ein erstes Dämpferausgangsteil (36) auf, die über die Wirkung von ersten Energiespeicherelementen (38), hier Schraubenfedern gegeneinander begrenzt verdrehbar sind. Das Dämpfereingangsteil (34) ist mit dem Ausgangslamellenträger (26) der Anfahrkupplung verbunden. Das Dämpferausgangsteil (36) ist mit einem zweiten Dämpfereingangsteil (40) der zweiten Dämpferstufe (42) fest verbunden oder reinteilig mit diesem ausgebildet. Das zweite Dämpfereingangsteil (40) ist über die Wirkung von zweiten Energiespeicherelementen (44), hier Schraubenfedern gegenüber einem zweiten Dämpferausgangsteil (46) begrenzt verdrehbar.

Das zweite Dämpferausgangsteil (46) ist mit der Abtriebswelle (16) fest verbunden. An dem zweiten Dämpfereingansgteil (40) ist ein Schwingungstilger (50), hier ein Fliehkraftpendel (52) angeordnet. Das Fliehkraftpendel (52) weist Pendelmassen (54) auf, die an einem Pendelflansch (36) und gegenüber diesem entlang von Pendelbahnen begrenzt verschwenkbar gelagert sind.

Radial versetzt zu den, hier über der Anfahrkupplung (12) ist eine Trennkupplung (60) zur trennbaren Drehmomentübertragung von einem zweiten Antriebselement (62), hier einem Elektromotor (64) und dem Abtriebselement, hier dem Getriebe angeordnet. Die Trennkupplung (60) ist als Lamellenkupplung ausgebildet, mit einem mit dem zweiten Antriebselement (62) verbundenen Eingangslamellenträger (66) als Kupplungseingang (68), hier ein Aussenlamellenträger der Trennkupplung. In dem Eingangslamellenträger sind antriebsseitige Lamellen (70) eingehängt, die bei betätigter Trennkupplung (60) mit abtriebsseitigen Lamellen (72) in Reibeingriff gebracht werden können. Die abtriebsseitigen Lamellen (72) sind in einem Ausgangslamellenträger (74) als Kupplungsausgang (76), hier ein Innenlamellenträger eingehängt. Der Außenlamellenträger (74) ist hier insbesondere einteilig mit dem Eingangslamellenträger (18) der Anfahrkupplung (12) ausgebildet.

Die Anfahrkupplung(12) und die Trennkupplung (60) sind als nasslaufende Kupplungen ausgebildet und hier in einer parallel Anordnung, was bedeutet, dass zur Drehmomentübertragung von dem ersten Antriebselement, insbesondere der Brennkraftmaschine die Trennkupplung (60) nicht zwingend betätigt sein muss.

Dabei ist ein Fluid vorgesehen, das mit der Anfahrkupplung (12) und der Trennkupplung (60) als Kühlmedium zusammenwirkt. Die Anfahrkupplung (12) und die Trennkupplung (60) sind wiederum in einem von dem gemeinsamen Fluid durchströmbaren Nassraum (80) angeordnet. Dies ermöglicht eine besonders bauraumoptimale Ausgestaltung der Kupplungseinrichtung (10).

Die Betätigung der Anfahrkupplung (12) und der Trennkupplung (60) erfolgt hier insbesondere jeweils über eine gehäusefeste Kolben-Zylindereinheit (82), ein Betätigungslager (84) und ein über das Betätigungslager (84) gegenüber der gehäusefesten Kolben-Zylinder-Einheit (82) verdrehbares Betätigungsmittel (86). Das Betätigungsmittel (86) ermöglicht eine axiale Kraftbeaufschlagung der Lamellen der jeweiligen Kupplung zur Ermöglichung des Reibeingriff der jeweiligen antriebsseitigen (22, 70) und abtriebsseitigen (24, 72) Lamellen.

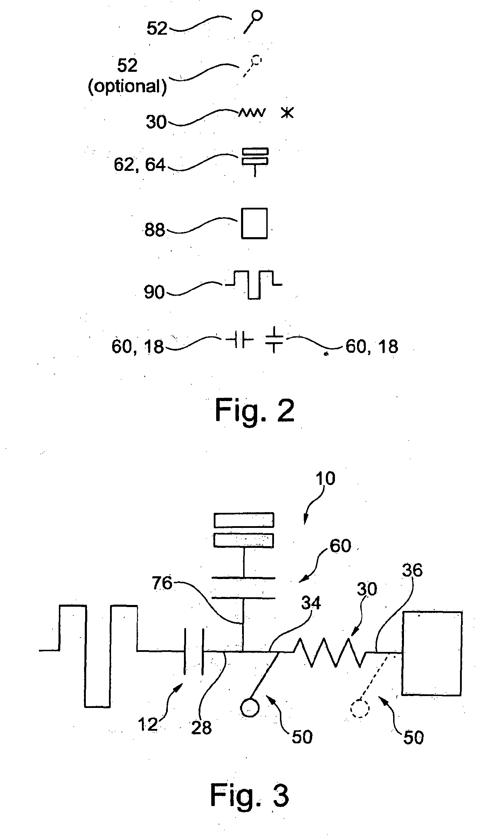

In Figur 2 ist Übersicht der in den nachfolgenden Figuren 3 bis 7 verwendeten Symbole dargestellt.

Figur 3 zeigt ein Schemabild einer Kupplungseinrichtung (10) in einer weiteren spezi- - ellen Ausführungsform der Erfindung. Die Kupplungseinrichtung (10) ist hier in paralleler Anordnung ausgebildet. Dabei ist der Kupplungsausgang (76) der Trennkupplung (60) mit dem Kupplungsausgang (28) der Anfahrkupplung (12) verbunden. Zwischen dem Kupplungsausgang (28) der Anfahrkupplung (12) und dem Kupplungsausgang (76) der Trennkupplung (60) und dem Abtriebselement, hier dem Getriebe ist ein einstufiger Drehschwingungsdämpfer (30) angeordnet. An dem Dämpfereingangsteil (34) dieses Drehschwingungsdämpfers (30) ist ein Fliehkraftpendel (50) angeordnet. Alternativ oder zusätzlich hierzu kann ein Fliehkraftpendel (50) an dem Dämpferausgangsteil (36) dieses Drehschwingungsdämpfers (30) angeordnet sein.

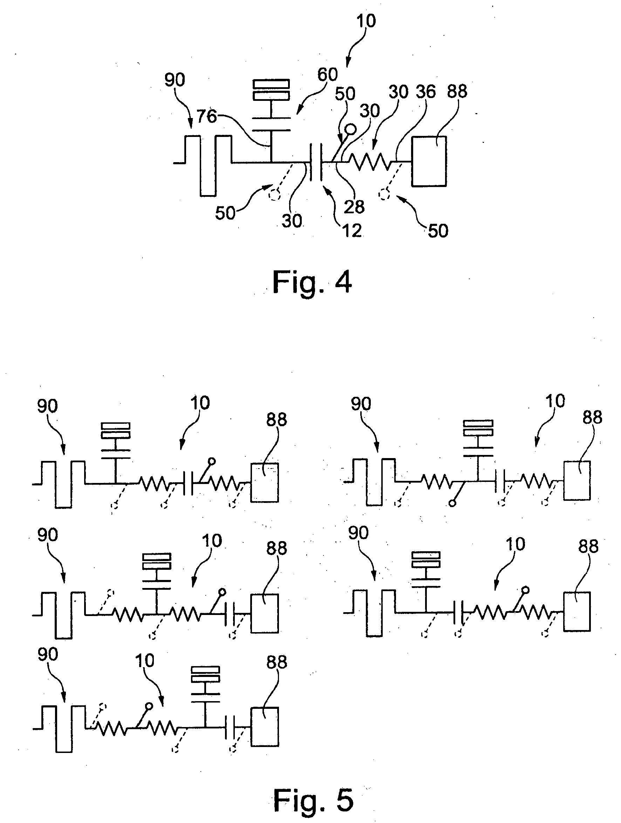

In Figur 4 ist ein Schemabild einer Kupplungseinrichtung (10) in einer weiteren speziellen Ausführungsform der Erfindung dargestellt. Die Kupplungseinrichtung(10) ist hier in paralleler Anordnung ausgebildet. Dabei ist der Kupplungsausgang (76) der Trennkupplung (60) mit dem Kupplungseingang (20) der Anfahrkupplung (12) verbunden. Zwischen dem Kupplungsausgang(28) der Anfahrkupplung (12) und dem Abtriebselement, hier dem Getriebe ist ein einstufiger Drehschwingungsdämpfer (30) angeordnet. An dem Dämpfereingangsteil (34) dieses Drehschwingungsdämpfers(30) ist ein Fliehkraftpendel (50) angeordnet. Alternativ oder zusätzlich hierzu kann ein Fliehkraftpendel (50) an dem Dämpferausgangsteil (36) dieses Drehschwingungsdämpfers (30) angeordnet sein oder alternativ wiederum zu letzterem oder auch zusätzlich kann ein Fliehkraftpendel (50) an dem Kupplungseingang (20) der Anfahrkupplung (12) oder dem Kupplungsausgang (76) der Trennkupplung (60) angeordnet sein.

Figur 5 zeigen weitere Schemabilder jeweils einer Kupplungseinrichtung (10) in einer weiteren speziellen Ausführungsform der Erfindung. Die Ausführungsformen unterscheiden sich in der Anordnung der Dämpferstufen des Drehschwingungsdämpfers und in der Anordnung des Fliehkraftpendels bzw. der Fliehkraftpendel.

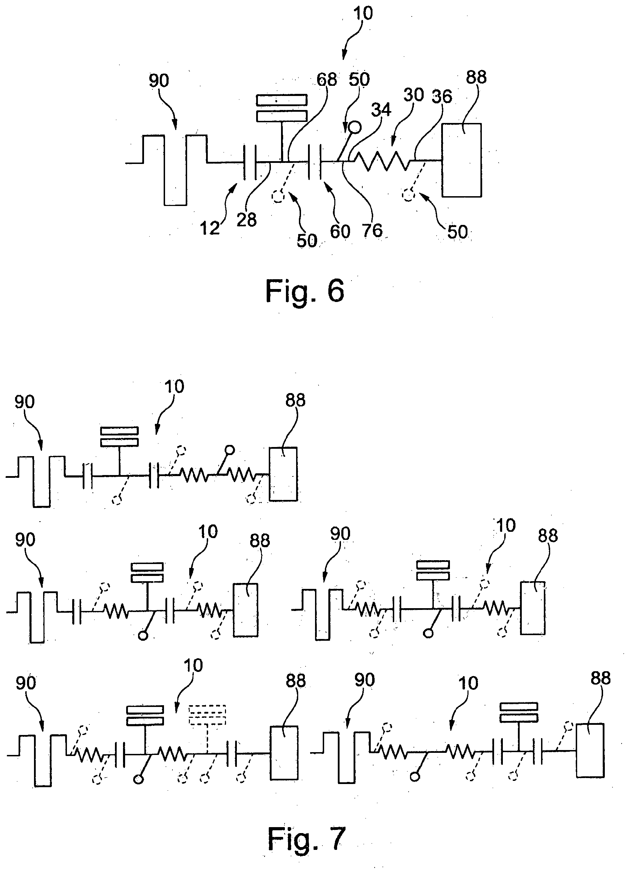

In Figur 6 ist ein Schemabild einer Kupplungseinrichtung (10) in einer weiteren speziellen Ausführungsform der Erfindung dargestellt. Die Kupplungseinrichtung (10) ist hier in serieller Anordnung ausgebildet, was bedeutet, dass zur Drehmomentübertragung zwischen erstem Antriebselement, hier der Brennkraftmaschine und dem Abtriebselement, hier dem Getriebe sowohl die Anfahrkupplung (12) als auch die Trennkupplung (60) betätigt sein müssen. Dabei ist der Kupplungsausgang (28) der Anfahrkupplung(12) mit dem Kupplungseingang (68) der Trennkupplung (60) verbunden. Zwischen dem Kupplungsausgang (76) der Trennkupplung (60) und dem Abtriebselement, hier dem Getriebe ist ein einstufiger Drehschwingungsdämpfer (30) angeordnet. An dem Dämpfereingangsteil (34) dieses Drehschwingungsdämpfers (30) ist ein Fliehkraftpendel (50) angeordnet. Alternativ oder zusätzlich hierzu kann ein Fliehkraftpendel (50) an dem Dämpferausgangsteil (36) dieses Drehschwingungsdämpfers (30) angeordnet sein oder alternativ wiederum zu letzterem oder auch zusätzlich kann ein Fliehkraftpendel (50) an dem Kupplungseingang (68) der Trennkupplung (60) oder dem Kupplungsausgang (28) der Anfahrkupplung (12) angeordnet sein.

Figur 7 zeigen weitere Schemabilder jeweils einer Kupplungseinrichtung (10) in einer weiteren speziellen Ausführungsform der Erfindung. Die Ausführungsformen unterscheiden sich in der Anordnung der Dämpferstufen des Drehschwingungsdämpfers und in der Anordnung des Fliehkraftpendels bzw. der Fliehkraftpendel.

### Bezugszeichenliste

- 10: Kupplungseinrichtung
- 12: Anfahrkupplung
- 14: Antriebswelle
- 16: Abtriebswelle
- 18: Eingangslamellenträger
- 20: Kupplungseingang
- 22: Lamellen
- 24: abtriebsseitigen Lamellen
- 26: Ausgangslamellenträger
- 28: Kupplungsausgang
- 30: Drehschwingungsdämpfer
- 32: Dämpferstufe
- 34: Dämpfereingangsteil
- 36: Dämpferausgangsteil
- 38: Energiespeicherelementen
- 40: zweite Dämpfereingangsteil
- 42: zweiten Dämpferstufe
- 44: zweiten Energiespeicherelelmente
- 46: zweiten Dämpferausgangsteil
- 50: Drehschwingungstilger
- 52: Fliehkraftpendel
- 54: Pendelmasse
- 56: Pendelflansdh
- 60: Trennkupplung
- 62: Antriebselement
- 64: Elektromotor
- 66: Eingangslamellenträger
- 68: Kupplungseingang
- 70: ähtriebsseitge Lamellen
- 72: abtriebsseitge Lamellen
- 74: Ausgangslamellenträger
- 76: Kupplungsausgang
- 80: Nassraum
- 82: Kolben-Zylindereinheit
- 84: Betätigungslager
- 86: Betätigungsmittel
- 88: Abtriebselement, insbesondere Getriebe
- 90: Erstes Antriebselement, insbesondere Brennkraftmaschine

## Patentansprüche

1. Kupplungseinrichtung (10) aufweisend eine Anfahrkupplung (12) zur trennbaren Drehmomentübertragung zwischen einem ersten Antriebselement, insbesondere einer Brennkraftmaschine und einem Abtriebselement, insbesondere einem Getriebe und aufweisend eine Trennkupplung (60) zur trennbaren Drehmomentübertragung von einem zweiten Antriebselement (62), insbesondere einem Elektromotor (64) und dem Abtriebselement, insbesondere dem Getriebe, wobei
die Anfahrkupplung (18) und die Trennkupplung (60) als nasslaufende Lamellenkupplungen ausgebildet sind und ein Fluid vorgesehen ist, das mit der Anfahrkupplung (12) und der Trennkupplung (60) als Kühlmedium zusammenwirkt, wobei die Anfahrkupplung und die Trennkupplung in einem von dem gemeinsamen Fluid durchströmbaren Nassraum (80) angeordnet sind,
wobei die Anfahrkupplung (12) und die Trennkupplung (60) radial versetzt zueinander ausgebildet sind und, **dadurch gekennzeichnet, dass**
die Trennkupplung einen mit dem zweiten Antriebselement verbundenen und als Außenlamellenträger ausgebildeten Eingangslamellenträger und einen als Innenlamellenträger ausgebildeten Ausgangslamellenträger (74) aufweist, und
die Anfahrkupplung einen mit dem ersten Antriebselement verbundenen und als Außenlamellenträger ausgebildeten Eingangslamellenträger und einen als Innenlamellenträger ausgebildeten Ausgangslamellenträger aufweist,
wobei in dem Eingangslamellenträger der Trennkupplung antriebsseitige erste Lamelllen eingehängt sind, die bei betätigter Trennkupplung (6) mit in den Innenlamellenträger der Trennkuplung eingehängten abtriebsseitigen zweiten Lamellen (72) in Reibeingriff gebracht werden können,
wobei in dem Eingangslamellenträger der Anfahrkupplung (12) antriebsseitige dritte Lamellen (22) eingehängt sind, die bei betätigter Anfahrkupplung (12) mit in den Innenlammellenträger der Anfahrkupplung eingehängten abtriebsseitigen vierten Lamellen (24) in Reibeingriff gebracht werden können,
wobei der Ausgangslamellenträger der Trennkupplung (74) einteilig mit dem Eingangslamellenträger der Anfahrkupplung (12) ausgebildet ist.

2. Kupplungseinrichtung(10) nach Anspruch 1, wobei der Nassraum (80) durch ein gemeinsames Gehäuse gebildet wird.

3. Kupplungseinrichtung (10) nach einem der Ansprüche 1 bis 2 wobei die Anfahrkupplung (12)und die Trennkupplung (60) parallel zueinander geschaltet sind.

4. Kupplungseinrichtung (10) nach einem der Ansprüche 1 bis 3, wobei die Anfahrkupplung (12) und die Trennkupplung (60) seriell zueinander geschaltet sind, womit zur Bewirkung einer Drehmomentübertragung vom ersten Antriebselement zum Abtriebselement sowohl die Anfahrkupplung (12) als auch die Trennkupplung (60) geschlossen sind.

5. Kupplungseinrichtung(10) nach einem der vorangehenden Ansprüche, wobei in dem Nassraum (80) ein Drehschwingungsdämpfer (30) und/oder ein Drehschwingungstilger (50), insbesondere ein Fliehkraftpendel angeordnet ist.

6. Kupplungseinrichtung (10) nach einem der vorangehenden Ansprüche, wobei die Anfahrkupplung (12) und die Trennkupplung (60) axial versetzt angeordnet sind.

7. Kupplungseinrichtung (10) nach einem der vorangehenden Ansprüche, wobei wenigstens ein Teil vom zweiten Antriebselement (62) von dem gemeinsamen Fluid beaufschlagt wird.

8. Kupplungseinrichtung (10) nach einem der vorangehenden Ansprüche, wobei die Betätigung der Anfahrkupplung (12) und/oder der Trennkupplung (60) über eine gehäusefeste Kolben-Zylindereinheit (82), ein Betätigungslager (84) und ein über das Betätigungslager (84) gegenüber der gehäusefesten Kolben-Zylinder-Einheit (82) verdrehbares Betätigungsmittel (86) erfolgt.

## Claims

1. A clutch device (10) having a starting clutch (12) for separable torque transmission between a first drive element, in particular an internal combustion engine, and an output element, in particular a transmission, and having a separating clutch (60) for separable torque transmission from a second drive element (62), in particular an electric motor (64), and the output element, in particular the transmission, wherein
the starting clutch (18) and the separating clutch (60) are designed as wet-running multi-plate clutches and a fluid is provided which interacts with the starting clutch (12) and the separating clutch (60) as a cooling medium, wherein
the starting clutch and the separating clutch are arranged in a wet space (80) through which the common fluid can flow, wherein
the starting clutch (12) and the separating clutch (60) are designed radially offset from one another and, **characterised in that**
the separating clutch has an input plate carrier connected to the second drive element and designed as an outer plate carrier and an output plate carrier (74) designed as an inner plate carrier, and
the starting clutch has an input plate carrier connected to the first drive element and designed as an outer plate carrier and an output plate carrier designed as an inner plate carrier, wherein first plates on the drive side are suspended in the input plate carrier of the separating clutch, which, upon actuation of the separating clutch (6), can be brought into frictional engagement with second plates (72) on the output side suspended in the inner plate carrier of the separating clutch,
wherein third plates (22) on the drive side are suspended in the input plate carrier of the starting clutch (12), which, upon actuation of the starting clutch (12), can be brought into frictional engagement with fourth plates (24) on the output side suspended in the inner plate carrier of the starting clutch,
wherein the output plate carrier of the separating clutch (74) is integrally formed with the input plate carrier of the starting clutch (12).

2. The clutch device (10) according to claim 1, wherein the wet space (80) is formed by a common housing.

3. The clutch device (10) according to one of claims 1 to 2, wherein the starting clutch (12) and the separating clutch (60) are connected in parallel to one another.

4. The clutch device (10) according to one of claims 1 to 3, wherein the starting clutch (12) and the separating clutch (60) are connected in series with one another, whereby both the starting clutch (12) and the separating clutch (60) are closed in order to effect a torque transmission from the first drive element to the output element.

5. The clutch device (10) according to one of the preceding claims, wherein a torsional vibration damper (30) and/or a torsional vibration absorber (50), in particular a centrifugal pendulum, is arranged in the wet space (80).

6. The clutch device (10) according to one of the preceding claims, wherein the starting clutch (12) and the separating clutch (60) are arranged axially offset.

7. The clutch device (10) according to one of the preceding claims, wherein at least part of the second drive element (62) is acted upon by the common fluid.

8. The clutch device (10) according to one of the preceding claims, wherein the actuation of the starting clutch (12) and/or the separating clutch (60) occurs via a piston-cylinder unit (82) fixed to the housing, an actuating bearing (84) and an actuating means (86) that is rotatable via the actuating bearing (84) with respect to the piston-cylinder unit (82) fixed to the housing.

## Revendications

1. Ensemble embrayage (10) comportant un embrayage de démarrage (12) destiné à une transmission de couple séparable entre un premier élément d'entraînement, en particulier un moteur à combustion interne et un élément de sortie, en particulier un engrenage et comportant un embrayage de séparation (60) pour la transmission de couple séparable d'un second élément d'entraînement (62), en particulier un moteur électrique (64) et l'élément de sortie, en particulier l'engrenage, dans lequel
l'embrayage de démarrage (18) et l'embrayage de séparation (60) sont conçus sous la forme d'embrayages multidisques humide et un fluide interagit avec l'embrayage de démarrage (12) et l'embrayage de séparation (60) en tant que milieu de refroidissement, dans lequel l'embrayage de démarrage et l'embrayage de séparation sont disposés dans un espace humide (80) pouvant être traversé par le fluide commun,
dans lequel l'embrayage de démarrage (12) et l'embrayage de séparation (60) sont conçus radialement décalés l'un de l'autre et, **caractérisé en ce que** l'embrayage de séparation comporte un support de disque d'entrée relié au second élément d'entraînement et conçu sous la forme de support de disque externe et un support de disque de sortie (74) conçu sous la forme de support de disque interne et l'embrayage de démarrage comporte un support de disque d'entrée relié au premier élément d'entraînement et conçu sous la forme d'un support de disque externe et un support de disque de sortie conçu sous la forme d'un support de disque interne,
dans lequel des premiers disques côté entraînement sont suspendus dans le support de disque d'entrée de l'embrayage de séparation, lesquels, lorsque l'embrayage de séparation (6) est actionné, peuvent être amenés en prise par friction avec des deuxièmes disques (72) côté sortie suspendus dans le support de disque interne de l'embrayage de séparation,
dans lequel des troisièmes disques (22) côté entraînement sont suspendus dans le support de disque d'entrée de l'embrayage de démarrage (12), lesquels, lorsque l'embrayage de démarrage (12) est actionné, peuvent être amenés en prise par friction avec des quatrièmes disques (24) côté sortie, lesquels sont suspendus dans le support de disque interne de l'embrayage de démarrage,
dans lequel le support de disque de sortie de l'embrayage de séparation (74) est formé monobloc avec le support de disque d'entrée de l'embrayage de démarrage (12).

2. Ensemble embrayage (10) selon la revendication 1, dans lequel l'espace humide (80) est formé par un boîtier commun.

3. Ensemble embrayage (10) selon l'une quelconque des revendications 1 à 2, dans lequel l'embrayage de démarrage (12) et l'embrayage de séparation (60) sont connectés en parallèle l'un à l'autre.

4. Ensemble embrayage (10) selon l'une quelconque des revendications 1 à 3, dans lequel l'embrayage de démarrage (12) et l'embrayage de séparation (60) sont connectés en série l'un avec l'autre, pour effectuer une transmission de couple du premier élément d'entraînement à l'élément de sortie, à la fois l'embrayage de démarrage (12) et l'embrayage de séparation (60) étant fermés.

5. Ensemble embrayage (10) selon l'une quelconque des revendications précédentes, dans lequel un amortisseur de vibrations de torsion (30) et/ou un amortisseur harmonique (50), en particulier un pendule à force centrifuge, est disposé dans l'espace humide (80).

6. Ensemble embrayage (10) selon l'une quelconque des revendications précédentes, dans lequel l'embrayage de démarrage (12) et l'embrayage de séparation (60) sont disposés axialement décalés.

7. Ensemble embrayage (10) selon l'une quelconque des revendications précédentes, dans lequel au moins une partie du second élément d'entraînement (62) est sollicitée par le fluide commun.

8. Ensemble embrayage (10) selon l'une quelconque des revendications précédentes, dans lequel l'actionnement de l'embrayage de démarrage (12) et/ou de l'embrayage de séparation (60) est effectué par l'intermédiaire d'une unité piston-cylindre (82) solidaire du boîtier, d'un palier d'actionnement (84) et d'un moyen d'actionnement (86) pouvant tourner par l'intermédiaire du palier d'actionnement (84) par rapport à l'unité piston-cylindre (82) solidaire du boîtier.
